# EUROPEAN PATENT APPLICATION

(11) **EP 0 567 156 A2**
(43) Date of publication of application: **27.10.1993**
(21) Application number: 93106676.5
(22) Date of filing: 23.04.1993
(51) Int. Cl.: H02B 1/30, H02B 1/36

(54) **Electric panelboard**

(30) Priority: 24.04.1992 IT MI920418
(71) Applicant: SCHIAVI S.r.l., I-20070 Massalengo (Milano) (IT)
(72) Inventor: Virginio, Negri, I-20075 Lodi (IT); Marchesi, Massimo, I-20070 Massalengo (Milano) (IT)
(74) Representative: Petruzziello, Aldo

(57) **Abstract**

An electric panelboard (Power Center) comprising a removable supporting structure, consisting of a removable self-supporting column (3), of the sectional type, combinable with at least one unit-composed side element (30) restrained between four pins (10) fixed to the base of the panel (1) and locked at the top by at least one fastening bracket (12), the said self-supporting column (3) consisting of opposed uprights (9) or body sides (4) joined by respective base and head elements (5) with a number of shelves (6) positionable at different heights and a number of rear panels (20) which can be fastened at adjustable depth, so as to determine a number of superimposed compartments closed at the front with doors (8).

## Description

The present invention refers to an electric panelboard, known in English terminology as a Power Center, that is a panelboard which contains inside it a mechanical structure usually realized with separate compartments, suitable for receiving, for example, the instrumentation, the main switch of the installation, distribution switches and other equipments.

Such metallic support structure for the various electrical equipments is usually fastened rigidly to the panelboard walls, and therefore the operator is compelled to carry out the assembly of the equipments and the various wiring harnesses from inside the panelboard, that is in extremely uncomfortable conditions.

In addition, since such panelboards are of various, more or less standardized sizes, it is necessary to prearrange a respective inner support structure for each size, with all the space-consuming and expensive stocks necessarily involved.

One aim of the invention is to provide a structure which allows the operator to work in very easy conditions, both in the installation phase and in the possible case of any later operations on the panel.

According to the invention, the supporting structure for the equipment consists of a self-supporting column, removable from the panelboard by simply turning over. In this way it can be positioned on a bench or on trestles, allowing maximum manageability.

Such self-supporting column is realized with sectional elements, and comprises, in particular, lateral uprights or body sides, a base element and a head element equal to the base element, a number of shelves positionable at different heights, a number of rear panels positionable at different depths, and a respective number of doors.

The said lateral uprights consist of section bars, into which are inserted corresponding pins foreseen on the base of the panelboard, which lock the column when it is assembled. The fastening of the column takes place by means of one or more upper brackets fastened to the head of the column, which is screwed onto the upper part of the panelboard.

According to another interesting characteristic of the invention, the supporting structure is of the modular type, so that the required dimensions can be obtained by adding lateral elements to the central column.

Further characteristics of the invention will be made clearer by the detailed description given below, which refers to one of its merely exemplary, and therefore not restrictive, embodiments, illustrated in the appended drawings, in which;
figure 1 is an axonometric view of an electric panelboard according to the invention, with the self-supporting column of the electric equipments illustrated in diagrammatic form, during the assembly phase or during removal from the board;
figure 2 is a diagrammatic view showing only the self-supporting column in figure 1, with modular elements which can be combined with it, illustrated in dotted lines;
figure 3 is a detail illustrating the sliding and fastening system of a bottom panel to the self-supporting column.

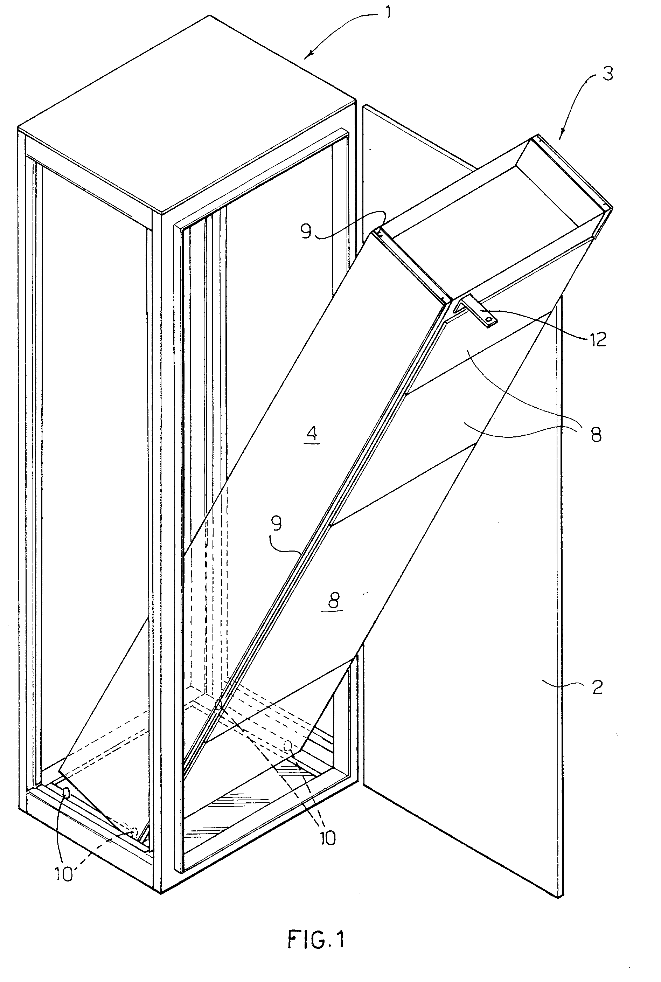

In figure 1, with reference numeral 1 an electric panelboard is indicated, which has a parallelepiped structure, substantially known in itself, with an access door 2.

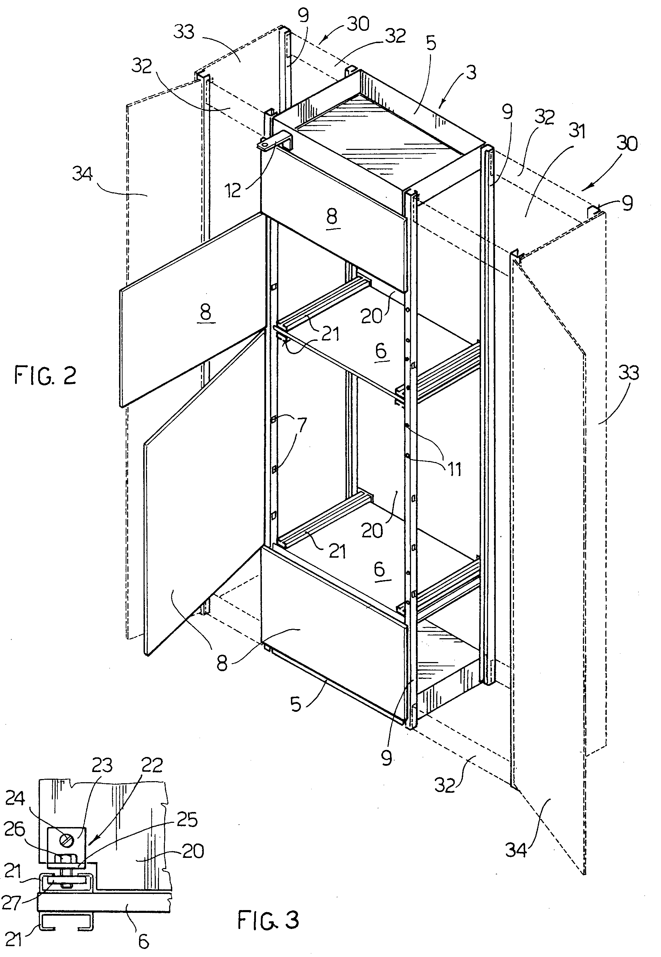

According to the invention, inside the board 1 a removable self-supporting type column 3 is located, which is illustrated in figure 2.

The self-supporting column 3 comprises four lateral uprights 9, or closing body sides 4, and two base and head elements 5, equal to each other, as well as a number of shelves 6 positionable at different heights in holes 7 prearranged in the uprights 9 or in the body sides 4, and rear panels 20 positionable at variable depth.

The rear panels 20 are assembled in such a way as to be able to slide in lateral C-shaped guides 21 fastened to the transverse edges of the shelves 6.

As can be seen from the detail in figure 3, at each corner of a bottom panel 20 an L-shaped bracket 22 is fastened, with a vertical flange 23 restrained by a screw 24 to the panel, and a horizontal flange 25 fastened by a screw 26 to a nut plate 27 slidable in the respective C-shaped guide 21.

The column 3, in this way, is divided up into a number of compartments, intended to receive respective electrical equipments, and enclosed by special front doors 8 opening on hinges.

The uprights 9 or the body sides 4 are constructed in such a way as to allow the insertion of pins 10 fastened to the base of the panelboard 1.

A series of front holes 11 is foreseen on each upright 9 or body side 4, able to be used for hingeing the doors 8 in a reversible way and for fastening more columns 3 between them depthways.

The self-supporting sectional column 3 allows installation of the electric equipments and the wire harnesses "outside the panelboard", and therefore in a way which is very convenient for the operator. After such installations have been carried out, the column 3 is inserted in the panelboard 1, positioning it in such a way that the pair of front pins 10 come into position inside the corresponding pair of front section bars 9, as shown in diagrammatic form in figure 1. The column 3 is then turned over backwards until it is brought into the upright position, in such a way that the other pair of pins 10 at the back also comes into position inside the corresponding back section bars 9 of the column. The fastening of the column 3, so as to prevent any possibility of it oscillating, is carried out, for example, by screwing an upper bracket 12 carried by the column to the structure of the panelboard 1.

Removing the column 3 from the panelboard 1 is carried out very easily by unhooking the fastening bracket 12, and turning over the column forwards, using the front pins 10 at the back as a fulcrum.

As can be seen in figure 2, lateral elements 30 can be combined with the column 3, which are shown with a dotted line in such figure and determine inner spaces 31, suitable to receive, for example, the feeder bars of the electric equipments and their output cables. Each element 30 comprises two uprights of the same type as those of the column 3 and therefore shown again with reference numeral 9, which are fastened to the corresponding uprights of the column 3 by means of cross members 32. The elements 30 conveniently have body sides 33 and can be closed at the front with doors 34. Obviously when side elements 30 are foreseen, the pins 10 of the base of the panelboard engage with the uprights of the side elements 30.

From what has been said above, the advantages of the invention seem evident, in that it allows installation and wire harnessing "outside the panelboard", and allows the supporting structure to be composed simply and of the required width, thus avoiding having to realize structures in different sizes.

## Claims

1. An electric panelboard with an inner mechanical structure, realized in superimposed compartments, for housing different types of electric equipments, characterized in that the said inner structure consists of a self-supporting removable column (3).

2. An electric panelboard according to claim 1. characterized in that the said self-supporting column (3) is restrained at the bottom between four pins (10) fastened to the base of the panelboard (1), in such a way as to be able to be inserted and removed from the electric panelboard by simply turning over with oscillation around the two front pins.

3. An electric panelboard according to claim 1 or 2, characterized in that the said self-supporting column (3) is fastened at the top by at least one bracket (12).

4. An electric panelboard according to any one of the previous claims, characterized in that the said removable self-supporting column (3) is of the sectional type and consists of lateral uprights (9) or of body sides (4) and of two elements (5), at the base and at the head respectively, with a number of shelves (6) positionable at different heights between the body sides (4), a number of rear panels (20) able to be fixed at variable depth, and a number of doors (8).

5. An electric panelboard according to claim 4, characterized in that the said lateral uprights (9) of the self-supporting column (3) are constructed in such a way as to accept the insertion of pins (10) foreseen on the base of the panelboard (1).

6. An electric panelboard according to claim 4 or 5, characterized in that the said bottom panels (20) slide on C-shaped guides (21) foreseen at the lateral ends of the shelves (6) and are able to be fastened to slide in such guides by nut plates (27).

7. An electric panelboard according to claim 5, characterized in that at the front of the said sections (9) symmetrical holes (11) are foreseen, for reversibly hingeing the front doors (8) which close the said superimposed compartments, or possibly for coupling more columns (3) in depth.

8. An electric panelboard according to any one of the previous claims, characterized in that modular elements (30) can be combined with the said column (3), for obtaining supporting structures with different widths.

9. An electric panelboard according to claim 8, in which the said modular elements (30) consist of uprights (9) connected by means of cross members (32) to the uprights or body sides of the column (3).
